# EUROPÄISCHE PATENTSCHRIFT

(11) **EP 3 721 508 B1**
(45) Veröffentlichungstag und Bekanntmachung des Hinweises auf die Patenterteilung: **10.08.2022**
(21) Anmeldenummer: 18815663.2
(22) Anmeldetag: 06.12.2018
(51) Int. Cl.: H01R 13/52, H01R 31/02, H02G 15/10, H02G 15/18, H01R 31/08

(54) **LEITUNGSVERBINDER SOWIE VERFAHREN ZUR MONTAGE EINES UMSPRITZTEN LEITUNGSVERBINDERS**
LINE CONNECTOR AND METHOD FOR INSTALLING AN OVERMOLDED LINE CONNECTOR
CONNECTEUR DE CÂBLES AINSI QUE PROCÉDÉ POUR LE MONTAGE D'UN CONNECTEUR DE CÂBLES SURMOULÉ

(30) Priorität: 07.12.2017 DE 102017222101
(43) Veröffentlichungstag der Anmeldung: 14.10.2020
(73) Patentinhaber: LEONI Bordnetz-Systeme GmbH, 97318 Kitzingen (DE)
(72) Erfinder: ALBERT, Volker, 97337 Dettelbach (DE); DEHN, Manfred, 97318 Kitzingen (DE); TAVSEL, Onur, 97082 Würzburg (DE); KAUFMANN, Andreas, 97318 Kitzingen (DE); WOLF, Sascha, 96050 Bamberg (DE)
(74) Vertreter: FDST Patentanwälte
(86) Internationale Anmeldenummer: PCT/EP2018/083874
(87) Internationale Veröffentlichungsnummer: WO 2019/110763

(56) Entgegenhaltungen:
- WO-A1-2016/066842
- DE-A1-102015 114 289
- US-A1- 2006 121 773
- US-B1- 6 376 773

## Beschreibung

Die Erfindung betrifft einen umspritzten Leitungsverbinder sowie ein Verfahren zur Montage eines derartigen Leitungsverbinders, insbesondere zur Verbindung von elektrischen Kraftfahrzeugleitungen.

Unter Leitungsverbinder wird allgemein eine Baugruppe verstanden, an der zumindest zwei Leitungen angeschlossen sind. Derartige Baugruppen werden zu Abdichtzwecken häufig mit einer Gussmasse umgeben.

Speziell im Kraftfahrzeugbereich beispielsweise bei Hybrid- und/oder Elektrofahrzeugen sind die elektrischen Leitungen und Leitungsverbinder und insbesondere deren Material- und Verarbeitungsqualität von großer Bedeutung. Beispielsweise sind in einem Hybrid- und/oder Elektrofahrzeug mehrere elektrische Verbraucher über derartige entsprechende Leitungen miteinander verbunden. Aufgrund dessen, dass es sich dabei vorzugsweise um Hochvolt-Verbraucher wie beispielsweise einen Akkumulator oder einen elektrischer Fahrmotor handelt, müssen die Leitungen und auch die Leitungsverbinder teilweise hohe Ansprüche hinsichtlich ihrer Verarbeitung und/oder ihrer Lebensdauer erfüllen.

Dokument DE102015114289A1 offenbart eine Elektroschleppanordnung zum Verbinden eines Modulwechselrichters mit einem Photovoltaikmodul, das ein Verbindergehäuse aufweist, das Zugentlastungselemente umfasst, die wirksam sind, wenn Gehäuseelemente miteinander verbunden werden, wodurch eine bessere Dichtheit und Zugfestigkeit der in der Baugruppe verwendeten Komponenten und damit erreicht wird Verlängerung der Lebensdauer einer Photovoltaikanlage.

Aus der WO 2016/066842 A1 ist ein Leitungsverbinder zu entnehmen, bei dem mehrere Leitungen in ein Gehäuse eingeführt und dort miteinander verbunden werden. An dem Gehäuse sind Stutzen ausgeformt, durch die eine jeweilige Leitung eingeführt ist. Zum Abdichten ist zwischen der Leitung und dem Stutzen ein Dichtelement eingefügt.

Aus der US 2006/0121773 A1 ist ein Leitungsverbinder zu entnehmen, bei dem Leitungen innerhalb eines Gehäuses miteinander elektrisch verbunden sind. Der Innenraum des Gehäuses ist mit einer Dichtmasse ausgegossen.

Auch aus der US 6 376 773 B1 ist ein solcher Leitungsverbinder zu entnehmen, bei dem ein Gehäuse mit einer Dichtmasse ausgegossen ist.

Eine Variante der Leitungsverbindung ist beispielsweise eine Umspritzung einer Baugruppe, die die Leitungen zusammenfügt. Jedoch ist eine Auswahl der Leitungen, insbesondere durch ein Material der Isolationsmäntel der Leitungen, für eine derartige Umspritzung eingeschränkt, um eine ausreichende Dichtheit der Verbindung zu erreichen. Ausschlaggebend hierfür ist eine geforderte Materialkompatibilität des Isolationsmaterials mit der Gussmasse. Bei einer Nichtkompatibilität der Materialien wird üblicherweise auf mehrteilige und kostenintensive Baugruppen zurückgegriffen und auf eine Umspritzung verzichtet. Unter Nichtkompatibilität der Materialien wird vorliegend speziell verstanden, dass keine stoffschlüssige Verbindung, z.B. beim Umspritzen mittels dieser Materialien im Hinblick auf eine dichte Verbindung möglich ist. Derartige inkompatible Materialien sind beispielsweise Kunststoffe basierend auf Fluor oder beispielsweise Silikon.

Ausgehend hiervon liegt der Erfindung die Aufgabe zugrunde, einen Leitungsverbinder sowie ein Verfahren anzugeben, mit deren Hilfe eine materialunabhängige und kostengünstige Leitungsverbindung realisiert werden kann.

Die auf den Leitungsverbinder gerichtete Aufgabe wird erfindungsgemäß gelöst durch einen Leitungsverbinder mit den Merkmalen des Anspruchs 1.

Vorteilhafte Ausgestaltungen, Weiterbildungen und Varianten sind Gegenstand der Unteransprüche.

Der Leitungsverbinder ist zum Verbinden von elektrischen Leitungen, insbesondere zum Verbinden von elektrischen Hochvoltleitungen in einem Kraftfahrzeug ausgebildet. Unter Hochvoltleitung wird vorliegend speziell eine elektrische Leitung verstanden, die mit Spannungen im Bereich von einigen 100 Volt bis maximal 1000V, beispielsweise mit einer Spannung mit einem Wert im Bereich von 300V bis 600V beaufschlagt ist.

Hierzu weist der Leitungsverbinder zumindest eine erste Leitung sowie eine zweite Leitung auf. Die beiden Leitungen sind als Mantelleitungen ausgebildet und weisen hierzu jeweils einen von einem Isolationsmantel umgebenen Kern auf. Die über den Leitungsverbinder miteinander verbundenen zumindest zwei Leitungen sind vorzugsweise identisch ausgebildet. Der Isolationsmantel bildet daher einen äußeren Mantel, der konzentrisch zu einer Mittenlängsachse der Leitung und typischerweise mit kreisrundem Querschnitt ausgebildet ist. Der Kern weist zumindest einen Leiter aus einem elektrisch leitenden Material, beispielsweise Kupfer auf.

Vorzugsweise weist der Kern lediglich genau einen Leiter auf. Die Leitung ist in diesem Fall von einer einzelnen Ader gebildet.

Der Kern weist alternativ auch mehrere Leitungselemente, beispielsweise elektrische Adern (mit einem Isolationsmantel versehener Leiter) auf, die von dem Isolationsmantel als gemeinsamer Mantel umgeben sind. Allgemein sind zur Ausgestaltung des Kerns verschiedene, den jeweiligen elektrischen Anforderungen der Leitung entsprechende, Ausgestaltungen hinsichtlich einer Anzahl an Adern und/oder Leitern denkbar. Somit handelt es sich bei dem Kern beispielsweise entweder um eine Ader (ein Leiter mit einer Isolierung) oder um mehrere Adern mit jeweils einem Leiter, der von einer Isolierung umgeben ist, die zusammen von dem Isolationsmantel umgeben sind. Als dritte Variante wäre beispielsweise eine Ausgestaltung der Leitung derart denkbar, dass der Kern mehrere (blanke) Leiter aufweist, die zusammen von dem Isolationsmantel umgeben sind.

Auf jeweils eine Leitung ist in einem Endbereich ein Dichtungselement aufgeschoben. Das Dichtungselement ist beispielsweise als eine Ringdichtung ausgebildet und weist bevorzugt ein elastisches Material auf. Vorliegend werden unter Endbereich beispielsweise die letzten 3cm bis 5 cm einer isolierten Leitung vor einem (zu einer elektrischen Kontaktierung) abisolierten Ende der Leitung verstanden.

Weiterhin weist der Leitungsverbinder einen Verbindungsbereich auf, in dem die Kerne der Leitungen elektrisch kontaktiert sind.

Um jedes der Dichtungselemente ist eine vorgefertigte Hülse angebracht, die auf das Dichtungselement eine radial, also in Richtung des Kerns, gerichtete Anpresskraft ausübt. D.h. die Hülse fixiert somit das Dichtungselement durch einen Reib- und Kraftschluss an dem Isolationsmantel. Hierdurch ist das Dichtungselement durch die Hülse gegen ein Verschieben entlang der Leitung gesichert. Die Hülse ist vorzugsweise einstückig, also monolithisch oder alternativ aus z.B. Halbschalenelementen gebildet.

Zur Ausbildung einer Verbindung der Leitungen ist der Verbindungsbereich von einer gemeinsamen Gussmasse umgeben ist, insbesondere umspritzt, sodass eine umgossene oder umspritzte Baugruppe ausgebildet ist. Das Aufbringen der Gussmasse erfolgt dabei beispielsweise durch Spritzen oder Gießen. Unter Gussmasse wird vorliegend also eine Masse verstanden, die beispielsweise durch einen (Niederdruck-) Verguss oder auch durch einen Spritzguss ausgebildet ist. Ein vorderer Teilbereich der Hülsen ist dabei in die Gussmasse eingebettet. Unter dem vorderen Teilbereich wird vorliegend ein Bereich der Hülse verstanden, der beispielsweise einem Sechstel bis zu einem Fünftel einer Gesamtlänge der Hülse entspricht und in Richtung des Verbindungsbereichs orientiert ist. Es ist daher insbesondere nur der vordere Teilbereich der Hülse in der Gussmasse eingebettet. Eine Verbindung der Gussmasse mit dem Kunststoff-Isoliermaterial des Isolationsmantels liegt nicht vor.

Bei der Umspritzung ist vorzugsweise eine stoffschlüssige Verbindung zwischen einem Material der Hülsen und der Gussmasse ausgebildet. Bei dem Leitungsverbinder handelt es sich daher um ein zumindest teilweise, vorzugsweise vollständig von der Gussmasse umgebenes Bauteil, also um einen umgossenen oder umspritzten Leitungsverbinder. Die Gussmasse bildet daher einen äußeren Isoliermantel für den Leitungsverbinder aus. Um die Gussmasse ist kein weiteres Gehäuseteil angebracht.

Der Vorteil dieser Ausgestaltung ist, dass mittels der Hülsen eine materielle Trennung eines Materials des Isolationsmantels und eines Materials der Gussmasse erreicht ist. Somit ist eine materialunabhängige Umspritzung von zumindest zwei Leitungen bei gleichzeitiger Gewährleistung der Abdichtung sichergestellt. Unter materialunabhängig wird vorliegend speziell verstanden, dass eine derartige Ausgestaltung des Leitungsverbinders unabhängig einer Materialkompatibilität des Materials des Isolationsmantels, des Materials des Dichtungselements und des Materials der Gussmasse erreicht ist. Die Abdichtung des Leitungsverbinders, beispielsweise gegen ein Eindringen von Feuchtigkeit ist vorliegend infolge einer durch die Hülse bedingten Pressung des Dichtelements auf den Isolationsmantel erreicht. Die Gussmasse dient vorliegend einer Kapselung der elektrischen Verbindung der Leitungen in den Endbereichen. Unter Kapselung wird vorliegend speziell verstanden, dass die Endbereiche durch die umspritzte Gussmasse gasdicht ausgebildet sind.

Eine mögliche Materialinkompatibilität des Gussmaterials und des Materials des Dichtelements und/oder des Isolationsmantels ist durch den vorliegenden Leitungsverbinder und insbesondere für eine Abdichtung des Leitungsverbinders vernachlässigbar, wodurch die einzelnen Werkstoffe und Materialien vorzugsweise basierend auf ihren elektrischen Anforderungen, beispielsweise für eine hinreichende elektrische Verbindung ausgewählt werden können.

Bevorzugt sind die Hülsen der Leitungen über ein Halteteil miteinander verbunden. Die Hülsen sind daher am Halteteil gehalten. Dieser Ausgestaltung liegt der Gedanke zugrunde, dass in einer Verbindung, insbesondere einer mechanischen Verbindung der Hülsen untereinander mittels des Halteteils, Vorteile hinsichtlich einer mechanischen Stabilität des montierten Leitungsverbinders zu sehen sind. An dem Halteteil sind die Hülsen an jeweils definierten Positionen angeordnet. Das Halteteil ist beispielsweise als eine Strebe oder als ein Bügel ausgebildet.

Vorzugsweise ist das Halteteil (lediglich) als ein Rahmen mit einer rechteckartigen Außenkontur ausgebildet. Vorzugsweise ist das Halteteil nicht als ein Gehäuse ausgebildet, weist als keinen insbesondere geschlossenen Deckel und / oder Boden auf. Das Halteteil ist daher vorzugsweise nach oben und/oder unten hin offen ausgebildet. Das Halteteil dient weiterhin beispielsweise im Rahmen der Montage des Leitungsverbinders als ein Hilfselement zur Positionierung der Leitungen beispielsweise hinsichtlich einer Position innerhalb des Leitungsverbinders und einem Abstand zueinander im montierten Zustand.

Gemäß einer zweckdienlichen Weiterbildung sind das Halteteil und die Hülsen einstückig ausgebildet. D.h. das Halteteil und die Hülsen bilden ein einziges einstückiges, also monolithisches Bauteil. Dieses Bauteil wird beispielsweise im Rahmen der Fertigung des Leitungsverbinders als eine vorgefertigte Baugruppe, beispielsweise als ein Spritzgussteil bereitgestellt.

Vorzugsweise ist der Verbindungsbereich gemäß einer bevorzugten Weiterbildung vollständig mit der Gussmasse vergossen. D.h., dass der Verbindungsbereich derart verkapselt ist, dass er insbesondere keine Lufteinschlüsse aufweist.

Sinnvollerweise ist der Leitungsverbinder als ein Verteiler mit zumindest drei Leitungen ausgebildet. Insbesondere ist der Leitungsverbinder nach Art eines Y-oder T-Verteilers ausgebildet. D.h., dass der Leitungsverbinder eine eingehende Leitung an zwei ausgehende Leitungen anschließt. Alternativ ist auch eine andere Ausgestaltung mit einer abweichenden Anzahl an Leitungen denkbar. So ist der Leitungsverbinder in einer alternativen Ausgestaltung beispielsweise nach Art eines Kammverbinders ausgebildet, bei dem eine eingehende Leitung in beispielsweise vier ausgehende Leitungen aufgeteilt ist.

Zur Ausbildung einer elektrischen Verbindung innerhalb des Leitungsverbinders sind die Leiter der Leitungen vorzugsweise gemeinsam an einem Verbindungselement kontaktiert. Die Leiter sind somit elektrisch miteinander verbunden und bilden beispielweise den bereits erwähnten Y-Verteiler aus. Hierzu weisen die Leiter insbesondere abisolierte Enden auf, die sich an den jeweiligen Endbereich in Richtung des Verbindungsbereichs betrachtet anschließen.

Gemäß einer bevorzugten Weiterbildung sind die Leiter mit dem Verbindungselement stoffschlüssig verbunden, insbesondere verschweißt. Durch eine derartige stoffschlüssige Verbindung ist eine einfache und insbesondere stabile elektrische Verbindung der Leiter auf dem Verbindungselement erreicht.

Gemäß einer zweckdienlichen Ausgestaltung ist das Verbindungselement plattenförmig und bevorzugt als eine Stromschiene oder alternativ als eine Leiterplatte ausgebildet. Das Verbindungselement weist insbesondere ein elektrisch leitendes Material, beispielweise ein Metall auf. Die Stromschiene ist z.B. ein gebogenes Blechbauteil.

In zweckdienlicher Ausbildung ist das Verbindungselement in dem Halteteil gehalten. Insbesondere liegt das Verbindungselement in dem Halteteil formschlüssig ein. In diesem Zusammenhang werden die Leitungen beispielsweise bei der Montage des Leitungsverbinders durch die Hülsen geführt, derart, dass die bereits genannten abisolierten Enden der Leitungen innerhalb des Halteteils positioniert sind und anschließend auf das Verbindungselement beispielsweise geschweißt werden.

Um das Verbindungselement in dem Halteteil anzuordnen und insbesondere zu fixieren, weißt das Halteteil in einer bevorzugten Ausgestaltung an seiner Innenseite mehrere Halteelemente für das Verbindungselement auf. Die Halteelemente sind vorliegend beispielsweise nach Art eines Rast- oder Schnappverbindungselements ausgebildet. Hierbei wird das Verbindungselement beispielsweise von einer Unterseite oder eine Oberseite des Halteteils aus in dieses "eingedrückt", sodass es mit den Rast- oder Schnappverbindungselementen eine Rast- oder Schnappverbindung ausbildet und somit fixiert ist. Der Vorteil dieser Ausgestaltung ist in einer Steigerung der Stabilität des gesamten Leitungsverbinders im montierten Zustand zu sehen.

Gemäß einer zweckdienlichen Ausgestaltung weisen die Hülsen eine zum Verbindungsbereich orientierte Schottwand mit einem Loch für die Leiter auf. Die Schottwand mit dem Loch ist vorzugsweise entlang eines Querschnitts (quer zu einer Erstreckungsrichtung der Leitungen) durch die jeweilige Hülse angeordnet und schließt diese bevorzugt endseitig (in Richtung des Verbindungsbereichs betrachtet) ab. Alternativ teilt die Schottwand die Hülse in zwei Kammern auf. D.h. im montierten Zustand ist jeweils eine Leitung derart durch das Loch der Schottwand geführt, dass ihr abisoliertes Ende durch das Loch im Verbindungsbereich und somit innerhalb des Halteteils positioniert ist. Der Teil des Endbereiches einer jeweiligen Leitung, in dem das Dichtungselement angeordnet ist, auf der anderen Seite angeordnet, also aus Sicht des Halteteils betrachtet hinter der Schottwand.

Durch die Schottwand wird beim Umspritzen des Verbindungsbereichs verhindert, dass die Gussmasse mit dem Dichtungselement und dem Isolationsmantel in Verbindung kommt. Hierdurch wird verhindert, dass möglicherweise zumindest zwei materialinkompatible Komponenten ausgewählt aus dem Dichtungselement, der Gussmasse und dem Isolationsmantel sich stofflich verbinden und Eigenschaften des Leitungsverbinders unvorteilhaft beeinflussen. Unter Eigenschaften des Leitungsverbinders werden vorliegend beispielsweise eine Dichtheit und/oder eine elektrische Isolierwirkung verstanden. Weiterhin wird hierdurch erreicht, dass das jeweilige Dichtungselement nicht während des Spritzgussvorgangs durch die Gussmasse verschoben und/oder verformt wird und aufgrund dessen seine Dichtwirkung verliert. Ein weiterer Vorteil ist darin zu sehen, dass einer Veränderung von elektrischen Eigenschaften, wie sie beispielsweise oftmals bei Steckverbindungen auftreten vorgebeugt ist. Unter einer Veränderung von elektrischen Eigenschaften wird vorliegend beispielsweise eine - durch eine Steckverbindung nicht zwangsweise sichergestellte - dauerhafte Kontaktierung einzelner Kontakte verstanden.

Bevorzugt weisen die Hülsen zumindest eine, umfangsseitig umlaufende Schmelzrippe auf. Speziell weisen die Hülsen mehrere Schmelzrippen auf. Unter Schmelzrippen werden vorliegend speziell umfangsseitig um die Hülsen umlaufende Verdickungen verstanden. Durch die Schmelzrippen wird eine Oberfläche der Hülsen vergrößert, an die sich bei der Montage die Gussmasse "anheftet" und somit zu einer längeren durch die Gussmasse ausgebildeten abgedichteten Strecke führt. Beispielsweise weist die Schmelzrippe in ihrer Höhe und ihrer Breite einen Wert im Bereich von 0,5mm bis 2mm auf. Die Schmelzrippen dienen also zum Einen einer Erhöhung der Stabilität des Leitungsverbinders. Zum anderen ist aufgrund der durch die Schmelzrippen ausgebildeten filigranen Struktur ein einfacheres und energieärmeres Aufbringen der Gussmasse ermöglicht.

Zweckdienlicherweise weisen die Hülsen in einem rückwertigen Teilbereich jeweils zumindest ein Rastelement zur Anordnung einer Zugentlastungshülse auf. Bevorzugt weisen die Hülsen jeweils zwei Rastelemente auf, die in Umfangsrichtung um die Hülse gegenüberliegend (also in einem Winkelabstand von 180°) angeordnet sind. Das zumindest eine Rastelement ist bevorzugt an einem aus Richtung des Halteteils betrachtet diesem gegenüberliegenden Ende der Hülse angeordnet. Die Anordnung der Zugentlastungshülse an dem zumindest einen Rastelement dient einer Zugentlastung der Leitungen, sodass auftretende Zugkräfte keinen Einfluss auf eine Abdichtung und/oder Stabilität des Leitungsverbinders ausüben.

Die auf das Verfahren gerichtete Aufgabe wird erfindungsgemäß gelöst durch ein Verfahren zur Fertigung eines Leitungsverbinders mit den Merkmalen des Anspruchs 14.

Die im Hinblick auf den Leitungsverbinder aufgeführten Vorteile und bevorzugten Ausgestaltungen sind sinngemäß auf das Verfahren zu übertragen und umgekehrt.

Das Verfahren dient insbesondere zur Montage des bereits erwähnten Leitungsverbinders mit einer ersten Leitung, einer zweiten Leitung, mit jeweils einem von einem Isolationsmantel umgebenen Kern, wobei der Kern zumindest einen Leiter aufweist.

Bei dem Verfahren werden die Enden von zumindest einer erste Leitung und einer zweiten Leitung mit jeweils einem von einem Isolationsmantel umgebenen Kern abisoliert. Auf einen Endbereich der Leitungen, vorzugsweise die letzten 3cm bis letzten 5cm der Leitungen, wird anschließend ein Dichtungselement aufgeschoben. Das Dichtungselement wird dabei derart positioniert, dass sich die abisolierten Enden der Leitungen in Richtung des Leitungsendes betrachtet jeweils an das Dichtungselement anschließen.

Um das jeweilige Dichtungselement wird eine Hülse angebracht, die in radialer Richtung eine Anpresskraft ausübt, sodass das jeweilige Dichtungselement kraft- und reibschlüssig auf den Isolationsmantel gepresst wird. Die Hülsen sind mit einem Halteteil zusammen als ein einteiliges, insbesondere monolithisches, Bauteil ausgebildet. Im montierten Zustand sind die abisolierten Enden der Leitungen innerhalb des Halteteils angeordnet. Hierzu werden die Leitungen in die jeweiligen Hülsen eingeschoben. In diesem Zusammenhang wird das Dichtungselement alternativ vor einem Einschieben der Leitungen in die Hülsen in die Hülse eingelegt, sodass es sich beim Einschieben der Leitungen in die Hülsen auf dem Isolationsmantle positioniert.

Anschließend werden die Kerne der Leitungen, speziell die abisolierten Enden in dem Verbindungsbereich kontaktiert. Hierzu wird von einer Oberseite oder einer Unterseite ein vorzugsweise plattenförmiges Verbindungselement in dem Halteteil angeordnet. Insbesondere liegt das Verbindungselement formschlüssig in dem Halteteil ein. Die abisolierten Enden der Leitungen liegen hierbei auf dem Verbindungselement auf. Da das Verbindungselement vorzugsweise ein elektrisch leitendes Material aufweist, dient es zu einer elektrischen Kontaktierung der Leitungen untereinander. Die abisolierten Enden werden mit dem Verbindungselement bevorzugt stoffschlüssig verbunden, insbesondere verschweißt.

Anschließend wird der Verbindungsbereich mit einer Gussmasse umgeben, sodass ein vorderer Teilbereich der Hülsen in die Gussmasse eingebettet wird.

Vorzugsweise werden auf die - dem Verbindungsbereich gegenüberliegenden - Enden der Hülsen jeweils eine Zugentlastungshülse aufgeschoben, die mit an den Hülsen angeordneten Rastelementen eine Rastverbindung eingehen und somit eine Zugentlastung ausbilden.

Ausführungsbeispiele der Erfindung werden nachfolgend anhand der Figuren näher erläutert. Diese zeigen teilweise in stark vereinfachten Darstellungen:
- Fig. 1: eine Leitungsanordnung vor Montage eines Leitungsverbinders,
- Fig. 2: eine Draufsicht auf ein Halteelement mit angeordneten Hülsen,
- Fig. 3: der vormontierte Leitungsverbinder vor einem Umspritzen mit einer Gussmasse sowie
- Fig. 4: der montierte Leitungsverbinder nach dem Umspritzen mit der Gussmasse und angeordneten Zugentlastungselementen.

In den Figuren sind gleichwirkende Teile mit den gleichen Bezugszeichen dargestellt.

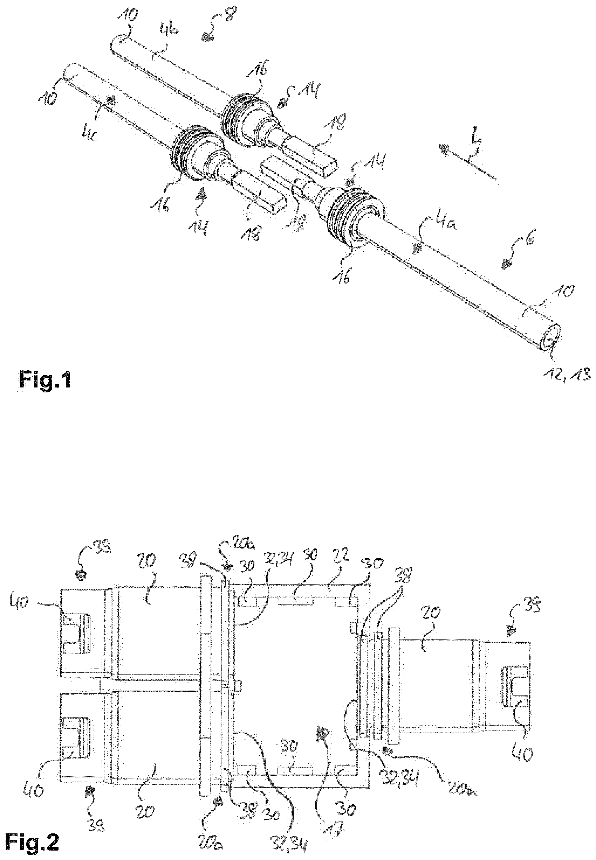

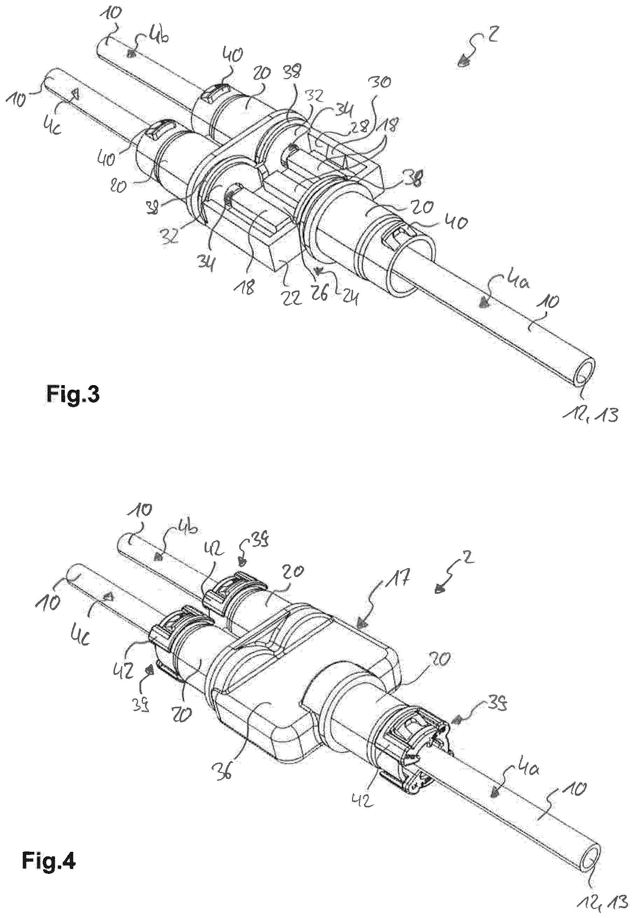

Fig.1 zeigt eine Leitungsanordnung vor einer Montage eines Leitungsverbinders 2 (vgl. Fig. 3 und Fig. 4). Im Ausführungsbeispiel ist der Leitungsverbinder 2 als ein Verteiler, speziell als ein Y-Verteiler ausgebildet. Hierzu sind im Ausführungsbeispiel eine erste Leitung 4a, eine zweite Leitung 4b sowie eine dritte Leitung 4c derart angeordnet, dass die erste Leitung 4a auf einer Eingangsseite 6 angeordnet ist und die zweite sowie die dritte Leitung 4b,4c auf einer Ausgangsseite 8 des Leitungsverbinders 2 angeordnet sind. Mit anderen Worten: Im Betrieb wird im Ausführungsbeispiel ein von der ersten Leitung 4a übertragener elektrischer Strom innerhalb des Leitungsverbinders 2 auf die zweite und die dritte Leitung 4b, 4c aufgeteilt. Es erfolgt also bevorzugt eine Leistungsübertragung und -verteilung über den Leitungsverbinder. Grundsätzlich ist dieses Konzept auch auf Signal-übertragungen anwendbar. Es ist auch eine Übertragung in umgekehrter Richtung und/oder eine abweichenden Anzahl an Leitungen denkbar. Die Leitungen 4a, 4b, 4c erstrecken sich in eine Längsrichtung L. Sie weisen entlang der Längsrichtung L vorzugsweise jeweils eine gleiche Geometrie, insbesondere einen gleichen Durchmesser und eine gleiche Konfektionierung auf. Alternativ sind die Leitungen 4a, 4b, 4c zueinander unterschiedlich ausgebildet uns weisen beispielsweise untereinander - vorzugsweise lediglich - unterschiedliche Durchmesser auf.

Die Leitungen 4a, 4b, 4c weisen einen von einem Isolationsmantel 10 umgebenen Kern 12 auf. Der Kern 12 ist im Ausführungsbeispiel als ein Leiter 13 beispielsweise als ein Kupferleiter insbesondere zur Strom- und Leistungsübertragung ausgebildet.

Weiterhin weisen die Leitungen 4a, 4b, 4c jeweils einen Endbereich 14 auf. In dem Endbereich 14 sind die jeweiligen Leitungen 4a, 4b, 4c von einem Dichtungselement 16 umgeben. D.h. das Dichtungselement 16 ist im Ausführungsbeispiel im Endbereich 14 der jeweiligen Leitungen 4a, 4b, 4c angeordnet und als eine Ringdichtung ausgebildet. Es umgibt den Isolationsmantel 10 umfangsseitig. Das jeweilige Dichtungselement 16 dient im montierten Zustand des Leitungsverbinders 2 einer Abdichtung der Leitungen 4a, 4b, 4c vor einem Eintritt von Feuchtigkeit in den Leitungsverbinder 2.

In den Endbereichen 14 weisen die Leitungen 4a, 4b, 4c abisolierte Leitungsenden 18 auf. Sie sind also als blanke Kontakte ausgebildet, d.h. der Kern 12 liegt frei. Im montierten Zustand des Leitungsverbinders 2 dienen die abisolierten Leitungsenden 18 einer elektrischen Kontaktierung der Leitungen 4a, 4b, 4c untereinander. Hierauf wird in der Beschreibung zur Fig. 3 detaillierter eingegangen.

Fig. 2 zeigt ein Halteteil 22 in einer Draufsicht. An dem Halteteil 22 sind mehrere, im Ausführungsbeispiel drei Hülsen 20 angeordnet. Im Ausführungsbeispiel sind das Halteteil 22 und die Hülsen 20 als ein einstückiges, also monolithisches Bauteil ausgebildet. Das Halteteil 22 ist im Ausführungsbeispiel als ein rechteckförmiger Rahmen ausgebildet. Das Halteteil 22 dient einer Positionierung der Leitungen 4a, 4b, 4c im montierten Zustand des Leitungsverbinders 2. Die Leitungen 4a, 4b, 4c sind hierbei im montierten Zustand in einem Verbindungsbereich 17 elektrisch miteinander verbunden. Die Hülsen 20 weisen zudem jeweils eine Schottwand 32 mit einem Loch 34 auf, die - in Richtung des Verbindungsbereiches 17 betrachtet - die jeweilige Hülse 20 abschließt. Weiterhin weist das Halteteil 22 mehrere Halteelemente 30 zur Aufnahme eines in Fig. 2 nicht dargestellten Verbindungselements 26 auf.

Im montierten Zustand ist der Verbindungsbereich 17 mit einer Gussmasse 36 umgeben, insbesondere umspritzt. Um eine Haftoberfläche für die Gussmasse 36 zu erhöhen, weisen die Hülsen 20 jeweils in einem vorderen Teilbereich 20a zumindest eine Schmelzrippe 38 auf. In einem rückwärtigen Teilbereich 39 der Hülsen 20 weisen diese jeweils zumindest ein, im Ausführungsbeispiel zwei Rastelemente 40 auf. In Fig. 2 ist jeweils nur ein Rastelement 40 erkennbar.

Die einzelnen in Fig. 2 dargelegten Komponenten des Halteteils 22 und somit des Leistungsverbinders 2 werden nachfolgend zu einem besseren Verständnis anhand der Fig. 3 und Fig. 4 nochmals genauer erläutert.

In Fig. 3 ist der Leitungsverbinder 2 in einem vormontierten Zustand dargestellt. Hierbei ist jeweils eine, insbesondere vorgefertigte Hülse 20 um jedes der Dichtungselemente 16 angebracht. Die Hülsen 20 üben im angebrachten Zustand eine radiale Anpresskraft auf die jeweiligen Dichtungselemente 16 aus. Die Dichtungselemente 16 sind also radial, d.h. in Richtung des Kerns 12 der jeweiligen Leitung 4a, 4b, 4c gepresst. Hierdurch bilden die Dichtungselemente 16 mit dem jeweiligen Isolationsmantel 10 einen Kraft- und Reibschluss aus und dichten somit die Endbereiche 14 ab.

Die Hülsen 20 sind im Ausführungsbeispiel zusammen mit einem Halteteil 22 als ein einstückiges, insbesondere monolithisches Bauteil ausgebildet. Das Bauteil ist beispielsweise als ein vorgefertigtes Spritzgussteil ausgebildet. Die Hülsen 20 sind hierbei derart an einer Außenseite 24 des Halteteils 22 orientiert, dass sie den Y-Verteiler ausbilden.

Zur Anordnung der Leitungen 4a,4b,4c in den Hülsen 20, werden die Leitungen 4a,4b,4c beispielsweise in die jeweiligen Hülsen 20 eingeschoben, sodass die abisolierten Leitungsenden 18 innerhalb des Halteteils 22 angeordnet sind.

Zur elektrischen Kontaktierung der Leitungen 4a,4b,4c sind die abisolierten Leitungsenden 18 innerhalb des Halteteils 22 auf einem plattenförmigen Verbindungselement 26 angeordnet, insbesondere mit diesem kontaktiert und somit elektrisch leitend miteinander verbunden. Hierzu weist das Verbindungselement 26 beispielsweise zumindest teilweise ein Metall auf. Alternativ besteht das Verbindungselement aus einem Metall. Im Ausführungsbeispiel ist das Verbindungselement als eine Leiterplatte ausgebildet, auf die die abisolierten Leitungsenden 18 stoffschlüssig angeordnet sind, beispielsweise geschweißt sind.

Im Rahmen der Montage des Leitungsverbinders 2 wird das Verbindungselement 26 im Ausführungsbeispiel von einer Unterseite (in Fig. 3 nicht dargestellt, in Fig. 2 ist eine Oberseite des Leitungsverbinders 2 gezeigt) aus in das Halteteil 22 formschlüssig eingelegt. Im Ausführungsbeispiel gemäß Fig. 3, also im montierten Zustand, "liegt" das Verbindungselement 26 aus der Betrachtungsweise der Fig. 3 unmittelbar unter den abisolierten Leitungsenden 18. Das Verbindungselement 26 ist im Halteteil 22 fixiert und somit beispielsweise gegen ein Herausfallen gesichert. Hierzu weist das Halteteil 22 an einer Innenseite 28 mehrere Halteelemente 30 auf. Im Ausführungsbeispiel sind die Halteelemente 30 als Rastverbindungen ausgebildet, sodass das Verbindungselement 26 beim Einlegen in das Halteteil 22 mit den Halteelementen 30 eine Rastverbindung eingeht und somit fixiert ist. Anschließend werden dann die abisolierten Leitungsenden 28 stoffschlüssig mit dem Verbindungselement 26 verbunden.

Zudem weisen die Hülsen 20 jeweils eine Schottwand 32 mit einem Loch 34 auf. Die Schottwand 32 dient einer räumlichen Aufteilung der jeweiligen Hülse 20. Dieser räumlichen Aufteilung liegt der Gedanke zugrunde, insbesondere das Dichtungselement 16 vor einem Kontakt mit einer in Fig. 3 nicht dargestellten Gussmasse 36 (vgl. Fig. 4) abzugrenzen. Mit anderen Worten: Von den abisolierten Leitungsenden 18 aus betrachtet (also von einem Inneren des Halteteils 22) ist das jeweilige Dichtungselement 16 einer Leitung 4a, 4b, 4c hinter der jeweiligen Schottwand 32 der jeweiligen Hülse 20 angeordnet. Bei einem Umspritzen des Verbindungsbereichs 17, insbesondere des Halteteils 22 mit der Gussmasse 36 verhindert die jeweilige Schottwand 32, dass die Gussmasse 36 im noch nicht ausgehärteten Zustand zu dem jeweiligen Dichtungselement 16 fließt. Eine Kontaktierung zwischen Dichtungselement 16 und der Gussmasse 36 ist unerwünscht, da bei einer stofflichen Verbindung der beiden 16,36 und dem anschließenden Aushärten der Gussmasse 36 das Dichtelement 16 seine Dichtwirkung verlieren kann.

Das Loch 34 dient einer Durchführung der Leitungen 4a, 4b, 4c, insbesondere der abisolierten Leitungsenden 18, um diese auf dem Verbindungselement 26 elektrisch miteinander zu kontaktieren.

Um der Gussmasse 36 eine vergrößerte Oberfläche für eine Haftung zu ermöglichen, weisen die jeweiligen Hülsen 20 mehrere Schmelzrippen 38 auf. Die Schmelzrippen 38 sind im Ausführungsbeispiel als umfangsseitig um die jeweilige Hülse 20 umlaufende, rechteckförmige Verdickungen ausgebildet.

Fig. 4 zeigt einen montierten Leitungsverbinder 2 mit mittels der Gussmasse 36 umspritztem Verbindungsbereich 17. Hierbei ist eine umspritzte Baugruppe ausgebildet, bei der ein vorderer Teilbereich 20a der Hülsen 20 in die Gussmasse 36 eingebettet ist.

Um eine Zugentlastung zu realisieren, weisen die jeweiligen Hülsen 20 zumindest ein, im Ausführungsbeispiel zwei Rastelemente 40 (in Fig. 4 ist lediglich ein Rastelement 40 zu erkennen) zur Anordnung eines Zugentlastungselements 42 auf.

Die Erfindung ist nicht auf die vorstehend beschriebenen Ausführungsbeispiele beschränkt. Vielmehr können auch andere Varianten der Erfindung von dem Fachmann hieraus abgeleitet werden, ohne den Gegenstand der Erfindung zu verlassen. Insbesondere sind ferner alle im Zusammenhang mit den Ausführungsbeispielen beschriebenen Einzelmerkmale auch auf andere Weise miteinander kombinierbar, ohne den Gegenstand der Erfindung zu verlassen.

### Bezugszeichenliste

- 2: Leitungsverbinder
- 4a: erste Leitung
- 4b: zweite Leitung
- 4c: dritte Leitung
- 6: Eingangsseite
- 8: Ausgangsseite
- 10: Isolationsmantel
- 12: Kern
- 13: Leiter
- 14: Endbereich
- 16: Dichtungselement
- 17: Verbindungsbereich
- 18: abisolierte Leitungsenden
- 20: Hülse
- 20a: vorderer Teilbereich
- 22: Halteteil
- 24: Außenseite des Halteteils
- 26: Verbindungselement
- 28: Innenseite des Halteteils
- 30: Halteelement
- 32: Schottwand
- 34: Loch
- 36: Gussmasse
- 38: Schmelzrippe
- 39: rückwärtiger Teilbereich
- 40: Rastelement
- 42: Zugentlastungshülse

## Patentansprüche

1. Leitungsverbinder (2) mit
- zumindest einer ersten Leitung (4a) und einer zweiten Leitung (4b) mit jeweils einem von einem Isolationsmantel (10) umgebenen Kern (12), wobei der Kern (12) zumindest einen Leiter (13) aufweist,
wobei auf die jeweilige Leitung (4a, 4b) in einem Endbereich (14) ein Dichtungselement (16) aufgeschoben ist,
- einem Verbindungsbereich (17), in dem die Kerne (12) der Leitungen (4a,4b) elektrisch kontaktiert sind sowie
- jeweils einer vorgefertigten Hülse (20), die um jeweils eines der Dichtungselemente (16) angebracht ist und auf das Dichtungselement (16) eine radiale Anpresskraft ausübt und die einen vorderen Teilbereich (20a) aufweist, wobei der Verbindungsbereich (17) von einer Gussmasse (36) umgeben ist, in die die jeweilige Hülse (20) lediglich mit dem vorderen Teilbereich (20a) eingebettet ist.

2. Leitungsverbinder (2) nach dem vorhergehenden Anspruch,
wobei die Hülsen (20) über ein Halteteil (22) miteinander verbunden sind.

3. Leitungsverbinder (2) nach dem vorhergehenden Anspruch,
wobei das Halteteil (22) als ein Rahmen ausgebildet ist.

4. Leitungsverbinder (2) nach einem der beiden vorhergehenden Ansprüche, wobei das Halteteil (22) und die Hülsen (20) einstückig als ein Bauteil ausgebildet sind.

5. Leitungsverbinder (2) nach einem der vorhergehenden Ansprüche,
wobei der Verbindungsbereich (17) vollständig mit der Gussmasse (36) vergossen ist.

6. Leitungsverbinder (2) nach einem der vorhergehenden Ansprüche,
der als ein Verteiler mit zumindest drei Leitungen (4a, 4b, 4c) ausgebildet ist.

7. Leitungsverbinder (2) nach einem der vorhergehenden Ansprüche,
wobei die Leiter (13) der Leitungen (4a, 4b) gemeinsam an einem Verbindungselement (26) kontaktiert sind.

8. Leitungsverbinder (2) nach dem vorhergehenden Anspruch,
wobei die Leiter (13) der Leitungen (4a, 4b) mit dem Verbindungselement (26) stoffschlüssig verbunden sind.

9. Leitungsverbinder (2) nach einem der beiden vorhergehenden Ansprüche, wobei das Verbindungselement (26) plattenförmig ist und als eine Stromschiene oder eine Leiterplatte ausgebildet ist.

10. Leitungsverbinder (2) nach Anspruch 2 und nach einem der Ansprüche 6 bis 8,
wobei das Verbindungselement (26) an dem Halteteil (22) gehalten ist, insbesondere formschlüssig einliegt.

11. Leitungsverbinder (2) nach dem vorhergehenden Anspruch,
wobei das Halteteil (22) an seiner Innenseite (28) mehrere Haltelemente (30) für das Verbindungselement (26) aufweist.

12. Leitungsverbinder (2) nach einem der vorhergehenden Ansprüche,
wobei die jeweiligen Hülsen (20) eine zum Verbindungsbereich (17) orientierte Schottwand (32) mit einem Loch (34) für den Leiter (13) aufweisen.

13. Leitungsverbinder (2) nach einem der vorhergehenden Ansprüche,
wobei die Hülsen (20) jeweils zumindest eine Schmelzrippe (38) aufweisen.

14. Leitungsverbinder (2) nach einem der vorhergehenden Ansprüche,
wobei die Hülsen (20) in einem rückwärtigen Teilbereich (39) jeweils zumindest ein Rastelement (40) zur Anordnung einer Zugentlastungshülse (42) aufweisen.

15. Verfahren zur Montage eines Leitungsverbinders (2) nach einem der vorhergehenden Ansprüche, welcher aufweist:
- zumindest eine erste Leitung (4a) und eine zweite Leitung (4b) mit jeweils einem von einem Isolationsmantel (10) umgebenen Kern (12), wobei der Kern (12) zumindest einen Leiter (13) aufweist,
wobei
- die erste Leitung (4a) und die zweite Leitung (4b) jeweils einen Endbereich (14) aufweisen, auf den ein Dichtungselement (16) aufgeschoben wird,
- um das Dichtungselement (16) eine Hülse (20) angebracht wird, die auf das Dichtungselement (16) eine radiale Anpresskraft ausübt,
- die Kerne (12) der Leitungen (4a,4b) in einem Verbindungsbereich (17) kontaktiert werden sowie
- der Verbindungsbereich (17) von einer gemeinsamen Gussmasse (36) umgeben wird, sodass ein vorderer Teilbereich (20a) der Hülsen (20) in die Gussmasse (36) eingebettet wird.

## Claims

1. Line connector (2), with
- at least one first line (4a) and one second line (4b), each with a core (12) that is surrounded by an insulating jacket (10), wherein the core (12) has at least one conductor (13),
wherein a sealing element (16) is slid onto the respective line (4a, 4b) in an end region (14),
- a connecting region (17), in which the cores (12) of the lines (4a, 4b) are electrically contacted, as well as
- a respective prefabricated sleeve (20) that is respectively attached around one of the sealing elements (16) and exerts a radial contact force on the sealing element (16), and that has a front partial region (20a),
wherein the connecting region (17) is surrounded by a casting compound (36), in which the respective sleeve (20) is embedded with the front partial region (20a) only.

2. Line connector (2) according to the preceding claim,
wherein the sleeves (20) are connected to each other (20) via a retaining part (22).

3. Line connector (2) according to the preceding claim,
wherein the retaining part (22) is formed as a frame.

4. Line connector (2) according to any one of the two preceding claims,
wherein the retaining part (22) and the sleeves (20) are integrally formed as a component.

5. Line connector (2) according to any one of the preceding claims,
wherein the connecting region (17) is completely casted with the casting compound (36).

6. Line connector (2) according to any one of the preceding claims,
that is formed as a distributor with at least three lines (4a, 4b, 4c).

7. Line connector (2) according to any one of the preceding claims,
wherein the conductors (13) of the lines (4a, 4b) are contacted together at a connecting element (26).

8. Line connector (2) according to the preceding claim,
wherein the conductors (13) of the lines (4a, 4b) are materially connected to the connecting element (26).

9. Line connector (2) according to any one of the two preceding claims,
wherein connecting element (26) is plate-shaped and is formed as a busbar or a printed circuit board.

10. Line connector (2) according to claim 2 and according to any one of the claims 6 to 8,
wherein the connecting element (26) is retained at the retaining part (22), in particular, lies positively therein.

11. Line connector (2) according to the preceding claim,
wherein the retaining part (22), at its inner side (28), has several retaining elements (30) for the connecting element (26).

12. Line connector (2) according to any one of the preceding claims,
wherein the respective sleeves (20) have a partition panel (32) that is oriented towards the connecting region (17) and includes a hole (34) for the conductor (13).

13. Line connector (2) according to any one of the preceding claims,
wherein the sleeves (20) each have at least one fusion rib (38).

14. Line connector (2) according to any one of the preceding claims,
wherein the sleeves (20), in a rear partial region (39), have at least one latching element (40) each for arrangement of a strain relief sleeve (42).

15. Method for installing a line connector (2) according to any one of the preceding claims, having:
- at least one first line (4a) and one second line (4b), each with a core (12) that is surrounded by an insulating jacket (10), wherein the core (12) has at least one conductor (13),
wherein
- the first line (4a) and the second line (4b) each have an end region (14), onto which a sealing element (16) is slid,
- a sleeve (20) that exerts a radial contact force on the sealing element (16) is attached around the sealing element (16),
- the cores (12) of the lines (4a, 4b) are contacted in a connecting region (17), as well as
- the connecting region (17) is surrounded by a common casting compound (36), such that a front partial region (20a) of the sleeves (20) is embedded in the casting compound (36).

## Revendications

1. Connecteur de câbles (2) comportant
- au moins un premier câble (4a) et un deuxième câble (4b) comportant chacun une âme (12) entourée d'une gaine isolante (10), l'âme (12) comportant au moins un conducteur (13),
un élément d'étanchéité (16) étant monté dans une zone d'extrémité (14) sur le câble (4a, 4b) respectif,
- une zone de raccordement (17), dans laquelle les âmes (12) des câbles (4a, 4b) sont mises en contact électrique ainsi que
- chaque fois une douille préfabriquée (20) qui est placée autour de chacun des éléments d'étanchéité (16) et exerce sur l'élément d'étanchéité (16) une force de pression radiale et qui présente une zone partielle avant (20a),
la zone de raccordement (17) étant entourée d'une masse d'enrobage (36) dans laquelle la douille (20) respective est noyée seulement par la zone partielle avant (20a).

2. Connecteur de câbles (2) selon la revendication précédente,
dans lequel les douilles (20) sont raccordées l'une à l'autre (20) par une pièce de maintien (22).

3. Connecteur de câbles (2) selon la revendication précédente,
dans lequel la pièce de maintien (22) est configurée sous forme d'un cadre.

4. Connecteur de câbles (2) selon l'une quelconque des deux revendications précédentes,
dans lequel la pièce de maintien (22) et les douilles (20) sont configurées en une seule pièce en tant qu'un composant

5. Connecteur de câbles (2) selon l'une quelconque des revendications précédentes,
dans lequel la zone de raccordement (17) est entièrement enrobée par la masse d'enrobage (36).

6. Connecteur de câbles (2) selon l'une quelconque des revendications précédentes,
qui est configuré en tant que distributeur à au moins trois câbles (4a, 4v, 4c).

7. Connecteur de câbles (2) selon l'une quelconque des revendications précédentes,
dans lequel les conducteurs (13) des câbles (4a, 4b) sont en contact ensemble au niveau d'un élément de raccordement (26).

8. Connecteur de câbles (2) selon la revendication précédente,
dans lequel les conducteurs (13) des câbles (4a, 4b) sont raccordés par liaison de matière à l'élément de raccordement (26).

9. Connecteur de câbles (2) selon l'une quelconque des deux revendications précédentes,
dans lequel l'élément de raccordement (26) est en forme de plaque et est configuré sous forme d'une barre conductrice ou d'une plaque conductrice.

10. Connecteur de câbles (2) selon la revendication 2 et selon l'une quelconque des revendications 6 à 8,
dans lequel l'élément de raccordement (26) est maintenu, en particulier inséré par emboîtement, sur la pièce de maintien (22).

11. Connecteur de câbles (2) selon la revendication précédente,
dans lequel la pièce de maintien (22) comporte sur sa face interne (28) plusieurs éléments de maintien (30) pour l'élément de raccordement (26).

12. Connecteur de câbles (2) selon l'une quelconque des revendications précédentes,
dans lequel les douilles respectives (20) présentent une cloison (32), orientée vers la zone de raccordement (17), comportant un trou (34) pour le conducteur (13).

13. Connecteur de câbles (2) selon l'une quelconque des revendications précédentes,
dans lequel les douilles (20) comportent chacune au moins une nervure fusible (38).

14. Connecteur de câbles (2) selon l'une quelconque des revendications précédentes,
dans lequel les douilles (20) comportent chacune dans une zone partielle arrière (39) au moins un élément d'encliquetage (40) destiné à la disposition d'un manchon compensateur de traction (42)

15. Procédé pour le montage d'un connecteur de câbles (2) selon l'une quelconque des revendications précédentes, qui comporte :
- au moins un premier câble (4a) et un deuxième câble (4b) comportant chacun une âme (12) entourée d'une gaine isolante (10), l'âme (12) comportant au moins un conducteur (13),
dans lequel
- le premier câble (4a) et le deuxième câble (4b) présentent chacun une zone d'extrémité (14) sur laquelle est monté un élément d'étanchéité (16),
- autour de l'élément d'étanchéité (16) est placée une douille (20) qui exerce sur l'élément d'étanchéité (16) une force de pression radiale,
- les âmes (12) des câbles (4a, 4b) sont mises en contact électrique dans une zone de raccordement (17) et
- la zone de raccordement (17) est entourée d'une masse d'enrobage (36) commune, de sorte qu'une zone partielle avant (20a) des douilles (20) est noyée dans la masse d'enrobage (36).
